# EUROPEAN PATENT APPLICATION

(11) **EP 4 005 784 A1**
(43) Date of publication of application: **01.06.2022**
(21) Application number: 21150849.4
(22) Date of filing: 11.01.2021
(51) Int. Cl.: B29D 30/32, B29D 30/26

(54) **MECHANICAL SHOULDERLESS TIRE BUILDING DRUM**

(30) Priority: 30.11.2020 KR 20200163656
(71) Applicant: Dongbang Engineering Co., Ltd., Gwangsan-gu Gwangju 62209 (KR)
(72) Inventor: KIM, Jisu, 61655 Gwangju (KR); HONG, Ki-Hun, 62030 Gwangju (KR)
(74) Representative: Byrne, Declan

(57) **Abstract**

The present invention provides a shoulderless tire building drum (10), and more particularly, a shoulderless tire building drum for fixing beads without a shoulder in the tire building drum. The shoulderless tire building drum according to an embodiment of the present invention includes a building drum body part on which semi-finished tire products are wound; beadlock parts (20) installed on both sides of the building drum body part to be vertically moved in a radial direction of building drum body part by a beadlock piston which moves forward and backward; and sealing bladder parts (30) installed on both sides of the beadlock parts to turn-up both sides of the semi-finished tire products while wrapping the beads by supplying a compressed air.

## Description

### [RELATED APPLICATIONS]

This application claims priority to Korean Patent Application No. 10-2020-0163656, filed on November 30, 2020 in the Korean Intellectual Property Office, the entire disclosure of which is incorporated herein by reference.

### [BACKGROUND OF THE INVENTION]

### 1. Field of the Invention

The present invention relates to a shoulderless tire building drum, and more particularly, to a shoulderless tire building drum for fixing beads without a shoulder in the tire building drum.

### 2. Description of the Related Art

Unless otherwise indicated herein, the contents described in this section are not prior art to the claims of the present application, and inclusion in this section is not admitted to be the prior art.

Generally, tires are manufactured through four processes of: refining by mixing raw materials of a tire to prepare a compound; extruding, rolling and cutting the compound in a sheet shape to prepare semi-finished tire products; building the semi-finished tire products to green cases; and vulcanizing the green cases to complete as a tire. First, the refining process of producing a compound by mixing various rubbers and chemicals with a mixer is performed, and an extrusion process, a process of injecting a tread and sidewall having a predetermined width and thickness with the compound according to tire specifications is performed. Next, after applying rubber to a steel wire and wound the predetermined number of times, a bead attaching process of attaching a bead filler injected according to the standard is performed, and a building process of sequentially assembling all semi-finished tire products such as a tread, sidewall, bead, belt, carcass plies and the like is performed to prepare a green tire (commonly referred to as a green case). Then, a vulcanizing process of putting the green tire manufactured through the above-described processes into a mold, and applying a predetermined pressure to the mold at a preset temperature for a predetermined period of time is performed, thereby producing a finished product tire.

The present invention discloses a building drum used in the building process of the above-described tire manufacturing processes. The building drum is a device to prepare a cylindrical green tire by sequentially attaching all materials used in the tire. The building drum is configured to rotate by being connected to a pulley coupled to a shaft of a driving motor through an electric belt such as a timing belt, and the semi-finished tire products are contracted or expanded in a radial direction of the building drum. More specifically, in the building drum driving device, in a state in which the semi-finished tire products (carcass ply and inner liner) applied to the tire are wound on the building drum, the beads are coupled to the semi-finished tire products, and a compressed air is supplied to a bladder located on a side of the building drum to expand the bladder. Thus, both sides of the semi-finished tire products are turned-up while wrapping the beads.

The bead is a part that directly contacts a rim, which is a part of a wheel, and has a ring shape in which wires bound by a steel wire are stacked with fibers and rubber. The bead serves to compress the semi-finished tire products to the rim so as to constantly maintain a pneumatic pressure in the tire by preventing the compressed air from leaking out from the tire, and also serves to clamp the tire so that the tire is not separated from the rim even if the pneumatic pressure in the tire is rapidly decreased.

Herein, during the turning-up process, first, in a state in which the semi-finished tire products are wound on the building drum, the bead is coupled to an upper portion of a building drum driving device with the semi-finished tire products interposed therebetween, and a beadlock piston moves forward to press a beadlock upward. Then, while a shoulder connected to a shoulder support moves upward to support a side of the bead, compressed air is supplied to the bladder so that both sides of the semi-finished tire products are turned-up while wrapping the beads.

Herein, in order to prepare a green tire, a plurality of processes should be performed using the above-described tire building drum. Meanwhile, in a process of producing a temporary tire (or a spare tire) other than a general tire, the similar or same processes as the above-described processes are also applied to manufacture the temporary tire. However, the temporary tire produced through these processes is used temporarily when driving is impossible due to a puncture or other defects, and high-speed driving is not possible and is used only until it is replaced by a new tire. Accordingly, it is also necessary to simplify the building process of the temporary tire.

### [Prior Art Document]

### [Patent Document]

(Patent Document 1) Korean Patent Registration No. 10-1306042 (published on September 9, 2013)

### [SUMMARY OF THE INVENTION]

It is an object of the present invention to provide a shoulderless tire building drum which allows a tire building process to be performed without a configuration of a shoulder for supporting a side of a bead mounted on an upper portion of a beadlock in the tire building drum.

In addition, it is not limited to the technical problems as described above, and it is obvious that another technical problem may be derived from the following description.

To achieve the above object, according to an aspect of the present invention, there is provided a shoulderless tire building drum including: a building drum body part on which semi-finished tire products are wound; beadlock parts installed on both sides of the building drum body part to be vertically moved in a radial direction of building drum body part by a beadlock piston which moves forward and backward; and sealing bladder parts installed on both sides of the beadlock parts to turn-up both sides of the semi-finished tire products while wrapping the beads by supplying a compressed air.

According to a preferred feature of the present invention, the shoulderless tire building drum may further include an insertion groove concavely formed from an upper portion to a lower portion of the beadlock part to support the bead mounted on the upper portion of the beadlock part.

According to a preferred feature of the present invention, the shoulderless tire building drum may further include a tension ring installed along an inner surface of the insertion groove formed on the beadlock part.

According to embodiments of the present invention, there are advantages as follows. Tire building is possible without the need for a shoulder and a shoulder driving part to vertically drive the shoulder, which were essentially used in the existing tire building drum, thus simplifying the building process itself.

In addition, according to an embodiment of the present invention, a distance from a portion where the bead of the tire building drum is placed to a side ring is reduced, such that the building drum may be easily applied to a process of producing a narrow tire or a temporary tire.

In addition, according to an embodiment of the present invention, since the tire building process is performed without a shoulder, unlike a method of building a tire in a two-stage building drum to produce a conventional narrow or temporary tire, the tire may also be produced in a type of one-stage building drum.

The effects of the present invention are not limited to the above advantages, and those skilled in the art should understand that it includes all effects that can be deduced from the detailed description of the present invention or the configurations of the invention described in the claims.

### [BRIEF DESCRIPTION OF THE DRAWINGS]

The above and other objects, features and other advantages of the present invention will be more clearly understood from the following detailed description taken in conjunction with the accompanying drawings, in which:
FIGS. 1 to 3 are cross-sectional views illustrating a conventional tire building drum;
FIG. 4 is a cross-sectional view illustrating a shoulderless tire building drum according to an embodiment of the present invention;
FIG. 5 is an enlarged view illustrating a state in which a bead is coupled to an upper portion of a beadlock in the shoulderless tire building drum according to an embodiment of the present invention; and
FIG. 6 is an enlarged view illustrating a state in which a bead is coupled to an upper portion of a beadlock in a shoulderless tire building drum according to another embodiment of the present invention.

### [DETAILED DESCRIPTION OF THE INVENTION]

Hereinafter, configurations, operations, and effects of a shoulderless tire building drum according to a preferred embodiment will be described with reference to the accompanying drawings. For reference, in the drawings described below, each component is omitted or schematically illustrated for convenience and clarity, and the size of each component does not reflect an actual size. In addition, the same reference numerals are denoted to the same components throughout the specification, and reference numerals for the same components in individual drawings will be omitted.

The shoulderless tire building drum according to an embodiment of the present invention includes: a building drum body part 10 on which semi-finished tire products are wound; beadlock parts 20 installed on both sides of the building drum body part 10 to be vertically moved in a radial direction of the building drum body part 10 by a beadlock piston 21 which moves forward and backward; and sealing bladder parts 30 installed on both sides of the beadlock parts 20 to turn-up both sides of the semi-finished tire products while wrapping the beads by supplying a compressed air.

First, the building drum body part 10 may have a cylindrical drum structure, and may have a structure that contracts or expands in a radial direction about a rotation axis while rotating by a power transmitted through the rotation axis. Semi-finished tire products including carcass ply and inner liner are wound on the building drum body part 10. Herein, the inner liner refers to a portion to be formed as the innermost rubber layer of the tire and serves to maintain a pneumatic pressure in the tire, and the carcass refers to a cord layer made of fibers or steel inside the tire, and forms a skeleton of the tire. With the semi-finished tire products wound around the building drum body part 10, the beads are coupled on the semi-finished tire products. The beads serve to attach the tire to a rim while wrapping ends of the cord, and may be fixed to both sides of the wound semi-finished tire products with being spaced apart therefrom, and then both sides of the semi-finished tire products are turned-up by a sealing bladder while wrapping the beads.

Next, the building drum may further include beadlock parts 20 installed on both sides of the building drum body part 10 to vertically move in the radial direction of the building drum body part 10 by the beadlock piston 21 which moves forward and backward. The beads on both sides of the building drum body part 10 are coupled and fixed to the upper portions of the beadlock parts 20 at positions corresponding to the beadlock parts 20 with the semi-finished tire products interposed therebetween. In a state in which the bead is fixed to the upper portion of the beadlock part 20, the beadlock part 20 moves upward while the beadlock piston 21 moves forward.

In addition, the building drum further includes sealing bladder parts 30 installed on both sides of the beadlock parts 20 to turn-up both sides of the semi-finished tire products while wrapping the beads by supplying a compressed air. The sealing bladder parts 30 are installed on both sides of the beadlock parts 20, and may be made of an elastic material such as leather or synthetic resin to expand as compressed air is supplied. When air is injected into the sealing bladder parts 30, both sides of the semi-finished tire products are turned-up while wrapping the beads.

Herein, after the beadlock part 20 moves upward, the conventional building drum has a configuration including a shoulder part 1 to support the beads from the sides and prevent them from being separated, but in the present invention, the beads fixed to the beadlock parts 20 are directly wrapped by the sealing bladder parts 30 to be turned-up, without the configurations of the shoulder part 1 and a shoulder support 2 for driving the shoulder part 1.

According to a preferred feature of the present invention, in order to support the bead mounted on the upper portion of the beadlock part 20, the building drum may further include an insertion groove 23 concavely formed from the upper portion of the beadlock part 20 toward a lower portion.

In order to support the bead without the shoulder part 1 with being placed on the upper portion of the beadlock part 20, it is necessary to fix the bead so as not to be separated from the beadlock part 20. Accordingly, in order to support the bead mounted on the upper portion of the beadlock part 20, the building drum may include the insertion groove 23 concavely formed from the upper portion to the lower portion. Conventionally, the upper portion of the beadlock part 20 formed in the tire building drum also has a groove formed in a partial concave shape, but this is formed for the purpose of inserting rubber corresponding to the semi-finished tire products while having an inward partial concave shape. However, in the case of the shoulderless tire building drum according to an embodiment of the present invention, the rubber corresponding to the semi-finished tire product as well as the bead located thereon are inserted into the insertion groove 23, and thereby it is possible to perform the same role as the shoulder part 1 without the shoulder part 1.

According to a preferred feature of the present invention, the building drum may further include a tension ring 25 installed along an inner surface of the insertion groove 23 formed on the upper portion of the beadlock part 20.

The tension ring 25 is installed along the inner side of the insertion groove 23, and when the beadlock part 20 is raised with the bead being located on the sealing bladder part 30, the lower portion of the bead and the sealing bladder part 30 may be fixed to the tension ring 25 while being inserted toward the inside of the insertion groove 23. The tension ring 25 serves to fix the lower portion of the bead and the sealing bladder part 30 by the tension and elastic force thereof, while preventing the bead from being separated by a subsequent turn-up process.

Based on the above-described configuration, a process of building a tire using the shoulderless tire building drum according to an embodiment of the present invention will be described in more detail below.

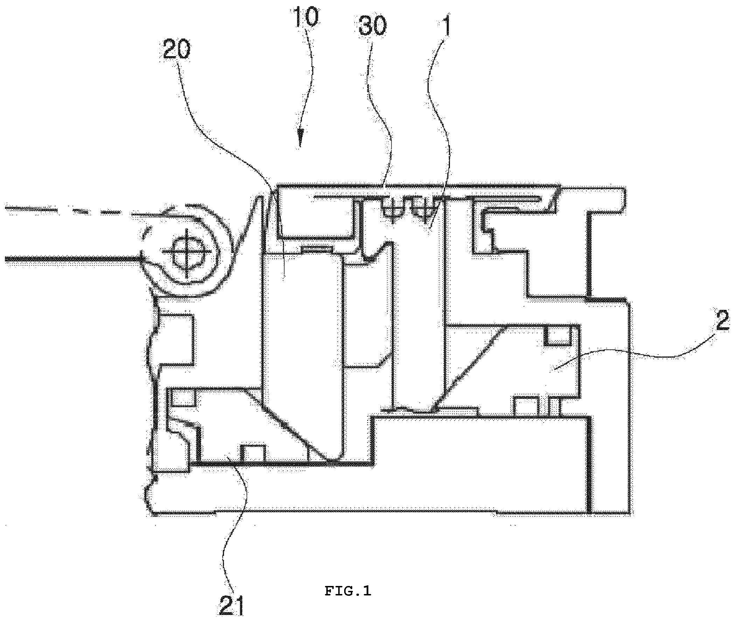

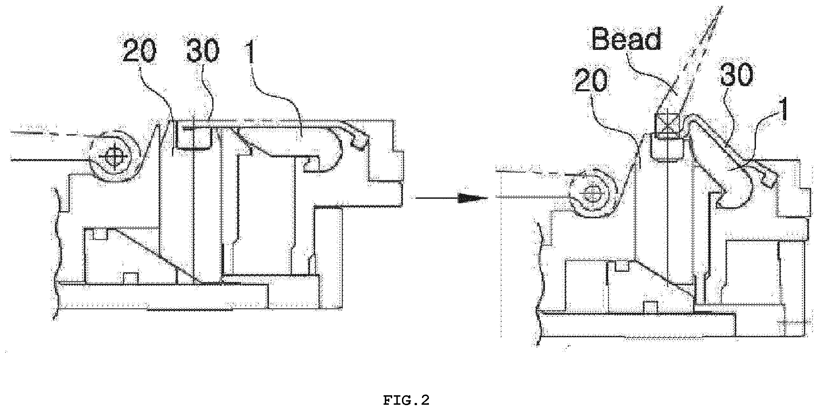

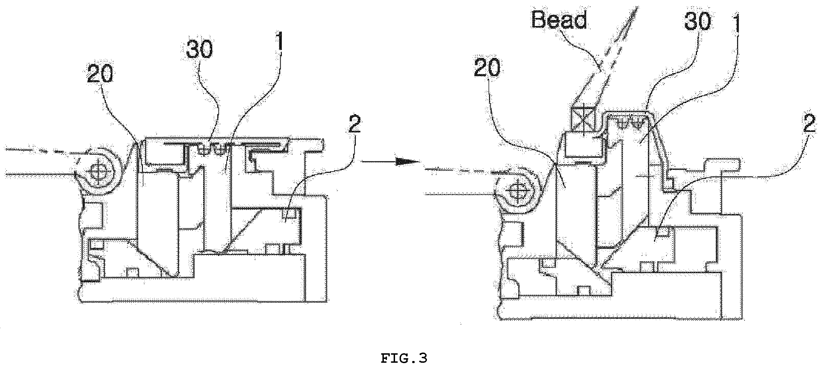

First, referring to FIGS. 1 to 3, a process of building a tire according to a conventional tire building drum will be described. After winding the semi-finished tire product on the building drum body part 10, beads are placed on the upper portion of the semi-finished tire product, more specifically, with the semi-finished tire products interposed therebetween at positions corresponding to the beadlock parts 20. Next, as the beadlock piston 21 moves forward, the beadlock parts 20 are raised in the radial direction of the building drum body part 10, and the shoulder part 1 linked with the shoulder support 2 is expanded in the radial direction of the building drum body part 10 with the sides of the beads being supported by the shoulder part 1. In this state, when compressed air is supplied to the sealing bladder parts 30, both sides of the semi-finished tire products are turned-up while wrapping the beads. Tires produced through such a series of processes have complex production processes or steps, and it is necessary to produce tires having the same quality while reducing the process steps.

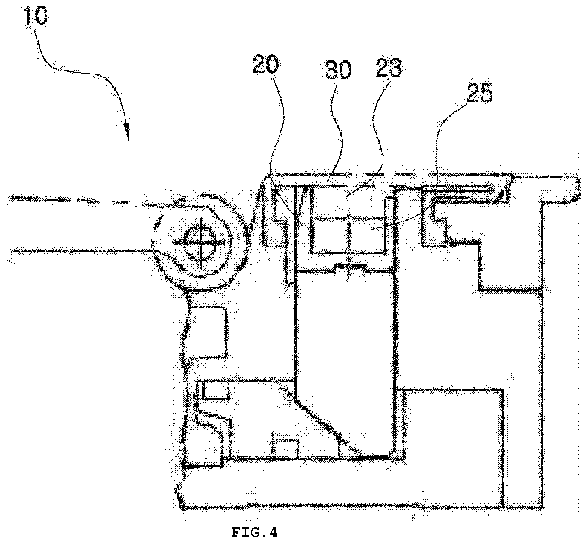

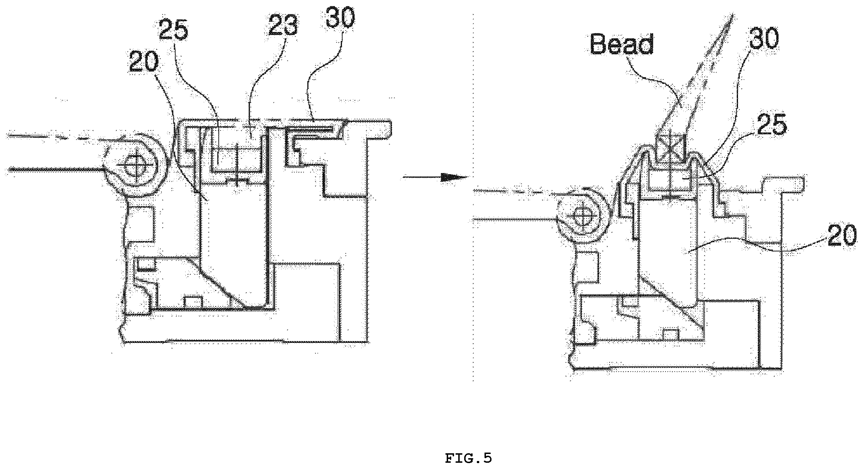

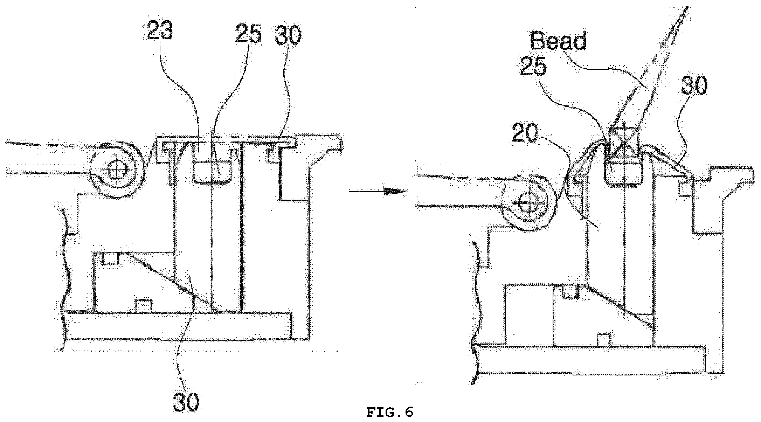

To this end, among the above-described tire building processes, the present invention uses the shoulderless tire building drum in the process of building the tire without the shoulder part 1 linked with the shoulder support 2, which will be described with reference to FIGS. 4 to 6. With the beads being fixed to the upper portions of the beadlock parts 20, more specifically, with the lower portions of the beads being inserted and fixed into the insertion grooves 23 formed on the upper portions of the beadlock parts 20, as the beadlock piston 21 moves forward, the beadlock parts 20 are raised in the radial direction of the building drum, and when supplying the compressed air to the sealing bladder parts 30, both sides of the semi-finished tire products are turned-up while wrapping the beads.

In this way, since the same tire or temporary tire as the conventional method may be formed without the configuration of the shoulder part 1, there are advantages in that the process steps may be reduced, as well as, in the case of the building drum without the shoulder part 1 and the shoulder support 2, a distance from the beadlock part 20 to the side ring is reduced, and thereby it is possible to optimize the building drum to produce a tire having a particularly narrow width.

Although preferred embodiments of the present invention have been described with reference to the accompanying drawings, the embodiments and drawings described and illustrated in the present disclosure are simply the most preferred embodiment and do not represent all the technical sprites of the present invention, and it will be understood that various modifications and equivalents may be made to take the place of the embodiments at the time of filling the present application. Thus, it is clear that the above-described embodiments are illustrative in all aspects and do not limit the present disclosure. The scope of the present disclosure is defined by the following claims rather than by the detailed description of the embodiment. It shall be understood that all modifications and embodiments conceived from the meaning and scope of the claims and their equivalents are included in the scope of the present disclosure.

### [Description of Reference Numerals]

- 1:: Shoulder
- 2:: Shoulder support
- 10:: Building drum body part
- 20:: Beadlock part
- 21:: Beadlock piston
- 23:: Insertion groove
- 25:: Tension ring
- 30:: Sealing bladder part

## Claims

1. A shoulderless tire building drum comprising:
a building drum body part on which semi-finished tire products are wound;
beadlock parts installed on both sides of the building drum body part to be vertically moved in a radial direction of building drum body part by a beadlock piston which moves forward and backward; and
sealing bladder parts installed on both sides of the beadlock parts to turn-up both sides of the semi-finished tire products while wrapping the beads by supplying a compressed air.

2. The shoulderless tire building drum according to claim 1, further comprising an insertion groove concavely formed from an upper portion to a lower portion of the beadlock part to support the bead mounted on the upper portion of the beadlock part.

3. The shoulderless tire building drum according to claim 2, further comprising a tension ring installed along an inner surface of the insertion groove formed on the upper portion of beadlock part.
